Europäisches Patentamt

European Patent Office

Office européen des brevets

(11) Publication number: 0 613 026 A1

# EUROPEAN PATENT APPLICATION

(21) Application number: 93103876.4

(22) Date of filing: 10.03.93

(51) Int. Cl.5: G01V 3/08

(30) Priority: 25.02.93 JP 62938/93

(43) Date of publication of application:
31.08.94 Bulletin 94/35

(84) Designated Contracting States:
DE GB NL

(71) Applicant: ASANUMA CORPORATION
12-6, Higashikozucho,
Tennoji-ku
Osaka (JP)
Applicant: KABUSHIKI KAISHA HONDA
DENSHI GIKEN
23-19, Asahicho 1-chome
Machida-shi, Tokyo (JP)

(72) Inventor: Kubo, Masatosi

3-3, Kozukayama 2-chome,
Tarumi-ku
Kobe, Hyogo (JP)
Inventor: Matsuo, Kazuhiro, c/o K.K. Honda
Denshi Giken
23-19, Asahicho 1-chome
Machida, Tokyo (JP)
Inventor: Kishikawa, Masayoshi
12-14, Hiroshiba-cho
Suita, Osaka (JP)

(74) Representative: Hering, Hartmut, Dipl.-Ing. et
al
Patentanwälte
Berendt, Leyh & Hering
Innere-Wiener-Strasse 20
D-81667 München (DE)

(54) Object detection device.

(57) The invention makes use of fluctuations in the quality factor (Q) of an oscillation circuit (S) that occur when an object comes into the vicinity of an electrode (10) as a means of detecting the presence or absence of the object. The invention comprises an electrode (10), which is set on the edge of a detection field, a supplementary device (20) which, together with the electrode (10), forms an oscillation circuit (S), and a Q detection device (30), which detects fluctuations in the quality factor of the oscillation circuit (S). The object detection device of the invention dispenses with the need for a frequency detection circuit and this simplifies the overall configuration. The device is thus more compact, less expensive and easier to use than conventional object detection devices while at the same time ensuring detection of the presence or absence of objects in the detection field.

FIG. 2

EP 0 613 026 A1

## BACKGROUND OF THE INVENTION

### 1. FIELD OF THE INVENTION

The invention relates to the improvement of an object detection device that detects the presence or absence of an object in its detection field.

### 2. DESCRIPTION OF THE PRIOR ART

There are well known object detection devices of the type disclosed in Japanese Patent Laying Open Gazette S63-305282, said disclosed device comprising a pair of electrodes inserted into the floor on either side of a partition wall and a supplementary circuit incorporating said electrodes to form an oscillation circuit, and designed such that, if a person or thing comes within range of said electrodes, there is a change in the capacitance of the electrodes and a corresponding fluctuation in the oscillation frequency of said oscillation circuit. The oscillation frequency is compared with a reference frequency to determine the presence or otherwise of said person or thing.

However, since conventional object detection devices of the type outlined above use changes in frequency of oscillation to determine the presence of an object in the detection field, they also need to be fitted with some sort of frequency detection circuit such as an F-V converter or an FM detector circuit and this makes their circuitry much more complex than that required for a device that simply compares a voltage or current reading with a predetermined threshold value. This in turn makes the conventional type of device both expensive and bulky. In addition, the more precise the level of detection required, the more sophisticated the necessary adjustment procedures become.

## SUMMARY OF THE INVENTION

The present invention has been designed with the above points in mind and it is one object of the invention to make use of the fluctuations in quality factor Q of an oscillation circuit that take place when an object approaches an electrode as a means of determining the presence or absence of an object in the vicinity of the electrode.

In order to achieve the above object, the object detection device of the present invention comprises an electrode set on the edge of a detection field, a supplementary device which, together with said electrode, forms an oscillation circuit, and a Q detection device to detect fluctuations in the quality factor of said oscillation circuit.

In the above configuration, when an object enters the detection field, the oscillation circuit Q fluctuates. This fluctuation is detected by the Q detection device and the entry of an object into the detection field is thereby detected.

The object detection device of the present invention thus dispenses with the need for a frequency detection circuit and this makes the overall configuration simpler and the device itself more compact, cheaper and easier to use than a conventional object detection device, while at the same time providing a sure way of detecting the presence of an object in the detection field.

The "electrode" refers to any single electrode comprising, for example, two aligned plates, two aligned rods or a single plate (or a single rod) and earth potential.

## BRIEF DESCRIPTION OF THE DRAWINGS

Figure 1 is an oblique view of the electrode of the preferred embodiment of the invention.

Figure 2 is a circuit diagram illustrating the overall configuration of the preferred embodiment of the invention.

Figure 3 is an explanatory diagram of the area around the electrode of the preferred embodiment of the invention.

Figure 4 corresponds to the explanatory diagram of Figure 3 when an object has entered the detection field.

Figure 5 corresponds to the circuit diagram of Figure 2 when an object has entered the detection field.

Figure 6 shows the result of a simulation based on Figure 5, in which frequency is shown on the horizontal axis and Q on the vertical axis.

Figure 7 illustrates impedance conversion in a circuit connecting resistance and reactance.

Figure 8 is an explanatory drawing illustrating the concept of substitution of changes in resistance for changes in capacitance.

Figure 9 shows the result of a simulation based on Figure 8, in which frequency is shown on the horizontal axis and Q on the vertical axis.

Figure 10 illustrates a different way of deploying the electrodes of the invention, in this case by fitting them to the side of a bath, which is shown in oblique view.

Figure 11 illustrates another different way of deploying the electrodes of the invention, in this case by fitting them to the underside of a toilet seat, which is shown in oblique view.

Figure 12 illustrates yet another different way of deploying the electrodes of the invention, in this case by fitting them to the back and seat of a chair, which is shown in oblique view.

## DETAILED DESCRIPTION OF THE PREFERRED EMBODIMENT

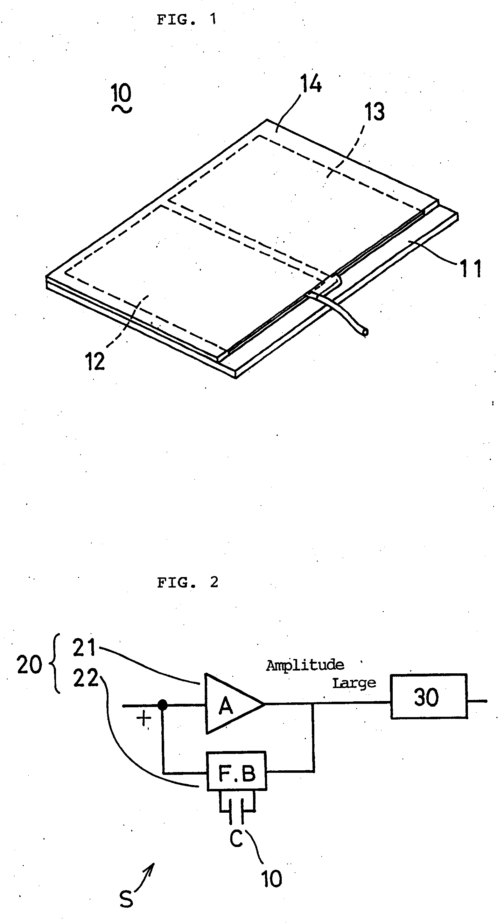

There follows a description of the preferred embodiment of the invention. Figure 1 shows the electrode 10 set on the edge of a detection field. The electrode can be made up either of two conductive elements or else of one conductive element and earth potential. As shown in Figure 1, the electrode 10 of the preferred embodiment comprises an insulating sheet 11, made of foamed polyethylene or a similar material, on top of which are fitted at a prescribed distance two electrodes plates 12,13 made of very thin sheet metal, the whole being finally covered by an insulating sheet 14 made of a material such as vinyl chloride. The electrode plates 12,13 could be made of steel, copper, aluminum or some other metal.

Said electrode 10 is connected to a supplementary device 20 which, together with the electrode 10, forms an oscillation circuit S. As shown in Figure 2, said supplementary device 20 comprises an amplification circuit 21 and a positive feedback element 22, the aforementioned electrode 10 (equivalent to a capacitor) being fitted in parallel with said positive feedback element 22. A Q detection device 30, which detects fluctuations in quality factor Q of the oscillation circuit S, is connected to the output side of said amplification circuit 21. Fluctuations in Q are detected, for example, by fluctuations in the amplitude of the voltage output from said amplification circuit 21. When a fluctuation in quality factor Q is detected, an intrusion identification signal is output from the Q detection device 30.

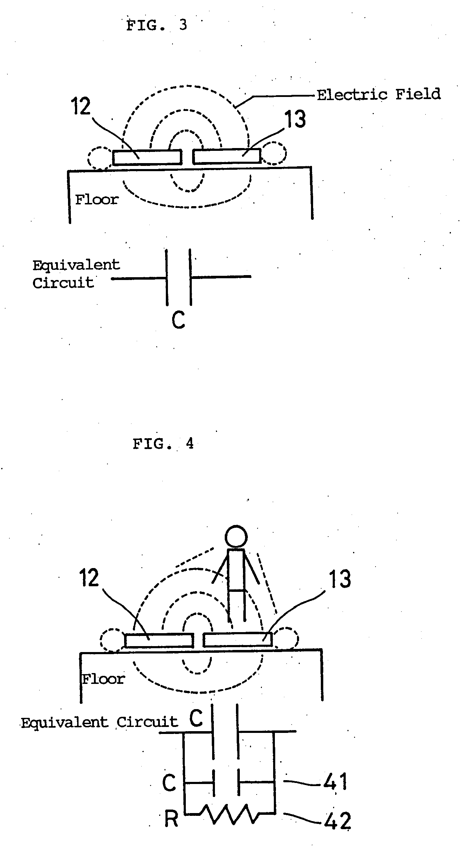

Thus, in the embodiment outlined above, the passage of a current through the supplementary device 20 leads to the formation of an electric field in the detection field around the electrode 10, as shown in Figure 3. When an object (Figure 4 shows a person) enters the detection field, this causes the Q of the oscillation circuit S to fluctuate.

When the fluctuation of Q is detected by the Q detection device 30, the entry of the object into the detection field is detected. In this case, since the electrode 10 is extremely thin, the installation of the device can be carried out simply by laying the electrode on the floor. The device of the invention can thus be quite simply installed in the cash corner of a bank, for example, and set to activate a burglary-prevention camera whenever an intrusion identification signal is received. The device can similarly be installed in toilets or behind large objects where people might try to hide in places like department stores, for example, and set to trigger a remote alarm on receipt of an intrusion identification signal to indicate that there is someone in the store after hours. Again, the device could be used to detect the entry or exit of a person into a toilet and to switch the lighting and deodorizing systems on and off or else to trigger the operation of an automatic flushing system. Electrodes could equally be fitted into floors throughout a building and used to improve building management efficiency by activating and deactivating air conditioning and lighting systems as people come and go. In the same way, the invention could be installed in single or multiple occupancy old peoples' homes to detect the entry of a person into a toilet or other selected area and to monitor the length of time spent there, thereby enabling any unusual departures from normal daily rhythms in the form of, for example, the complete cessation of movement or an overly long time spent in one place, to be detected at an early stage and a security alarm of some sort to be triggered. The system of the invention could also be used to boost the safety level of a dangerous area by detecting unauthorized entry and sounding an alarm.

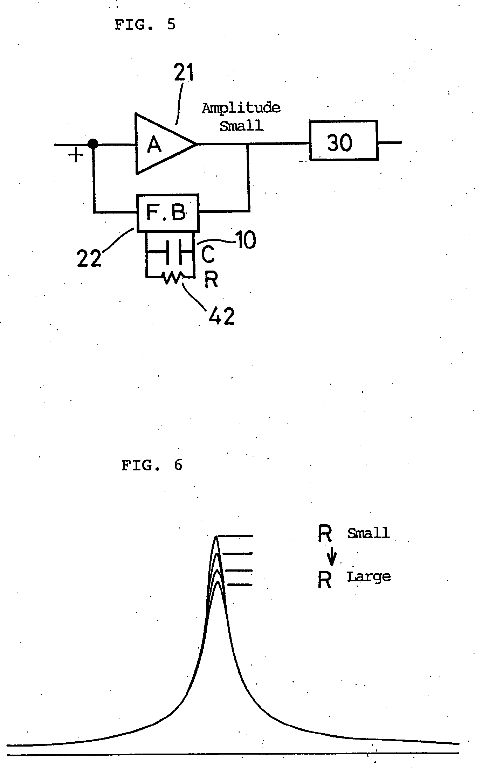

We will now explain in detail the mechanism by which the Q of the oscillation circuit S fluctuates when an object enters the detection field. If we represent the entry of an object into the detection field in the vicinity of the electrode 10 in the form of an equivalent circuit, it will look like the circuit shown in Figure 4 in which an additional capacitance component 41 and a resistance component 42 are connected in parallel with the electrode 10. If we concentrate our attention specifically on the resistance component 42, the overall configuration will assume the form shown in Figure 5 and the resistance component 42 will cause the Q of the oscillation circuit S to fluctuate as explained above. We simulated this effect using a model with a circuit configuration the same as that illustrated in Figure 5. The results, which are shown in Figure 6, illustrate quite clearly that if the resistance R of the resistance component 32 is increased, the value of Q, which is shown on the vertical axis, falls.

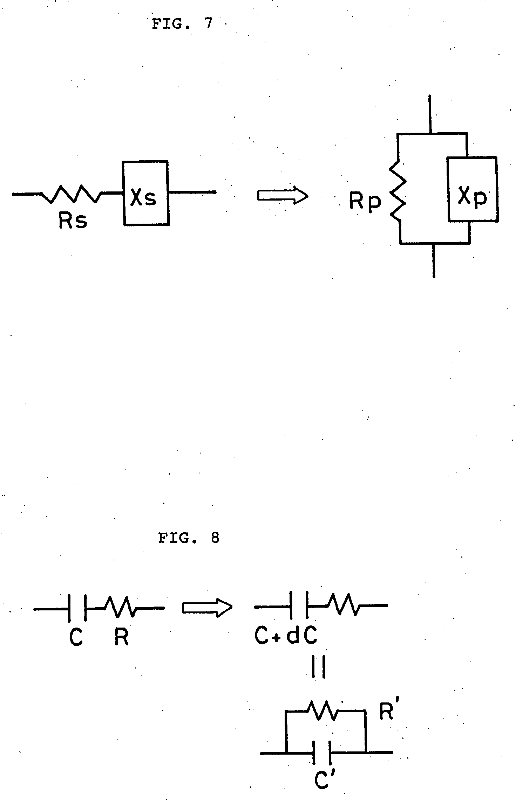

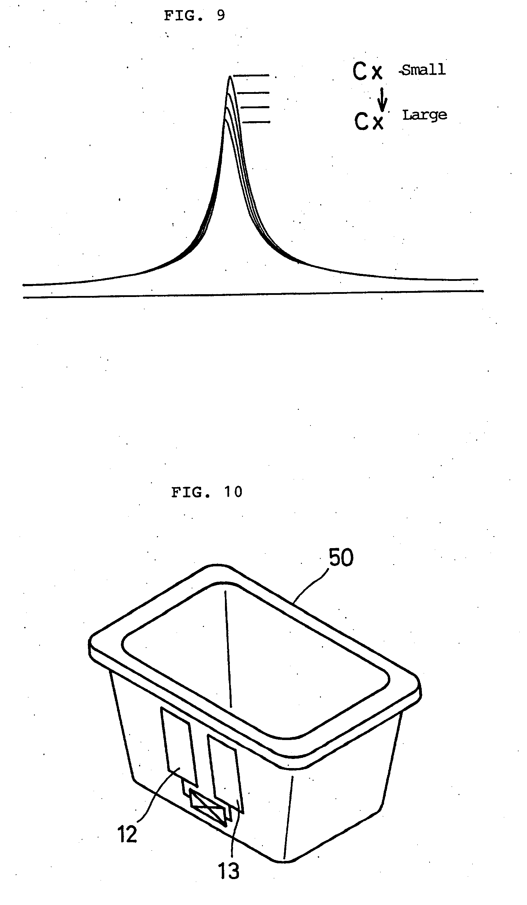

The same mechanism can be explained from a different point of view. For the purposes of this explanation, we will assume the existence of two circuits, namely circuit A, in which resistance Rs and reactance Xs are connected in series, as shown on the left of Figure 7, and circuit B, in which resistance Rp and reactance Xp are connected in parallel, as shown on the right of Figure 7. We can now consider the conversion of impedance from circuit A to circuit B. Given these configurations, we can identify the following relationships: "$Rp = Rs * (1 + Q * Q) = F0 (Xs, Rs)$", "$Xp = Xs * (1 + Q * Q) / Q / Q = Rs * (1 + Q * Q) / Q = F1 (Xs, Rs)$", "$Q = F1 (Xs / Rs)$". Changes in the reactance component of circuit A are thus converted into changes in resistance in circuit B. In other words, as shown in Figure 8, the change of the electrode capacitance to (C + dC) in the circuit in which the capacitor C electrode and the internal resistance R are connected in series, is substituted by the fluctuation of external resistance R' in the circuit in which the capacitor C' electrode and said external resistance R' are connected in parallel. Thus, the capacitance of the electrode 10 fluctuates in response to the entry of an object into the detection field and this has the same effect as if the resistance value of the external resistance connected in parallel with the electrode 10 changes. Fluctuations in the Q of the oscillation circuit S can be explained in this way. We simulated this effect using a model with the circuit configuration shown in Figure 8. The results, which are shown in Figure 9, illustrate quite clearly that if capacitance Cx is increased, the value of Q, which is shown on the vertical axis, falls.

In the embodiment of the invention outlined above, the frequency detection circuit called for by conventional object detection devices has been dispensed with, making the overall circuit configuration much simpler. The invention can thus be made smaller and cheaper than conventional object detection devices. At the same time, it is also easier to use by virtue of the simplification of the adjustment requirements.

We will now outline a number of other possible uses for the electrode 10 described above. The two bare electrode plates 12,13 could be fitted to the outside of a bath tub 50, for example, as shown in Figure 10. By connecting the electrodes to a supplementary device 20 and a Q detection device 30 and then setting said Q detection device 30 to detect more than one threshold value and to output more than one identification signal, it would be possible to detect both the presence of a person in the bath tub 50 and, at the same time, to detect the level of the water in the tub. Since bath water normally feels hot when a person first gets in, the use of the invention in this way would enable water to be fed into the tub at a reasonably low temperature and for an instruction for the water in the tub to be heated further to be output when a person is detected getting into the tub. The system could equally be set to detect the presence of a person in the bath tub 50, to measure the length of time that person spends in the tub and to output a warning signal on the assumption that something may have gone wrong if the measured time exceeds a specified value.

The electrode plates 12,13 need not necessarily be fitted to the outside of the bath tub 50 but could equally be fitted to the inside of the tub providing they were first treated as necessary to waterproof and insulate them. The electrode plates 12,13 could similarly be fitted either to the inside or the outside bottom of the bath tub 50 or else sunk into the wall of the tub. Electrode plates 12,13 could also be fitted elsewhere in the washing area of the bathroom, thereby making it possible to detect the presence of a person anywhere in the bathing area. This should in turn make it possible to guard against the occurrence of some types of bath related accidents.

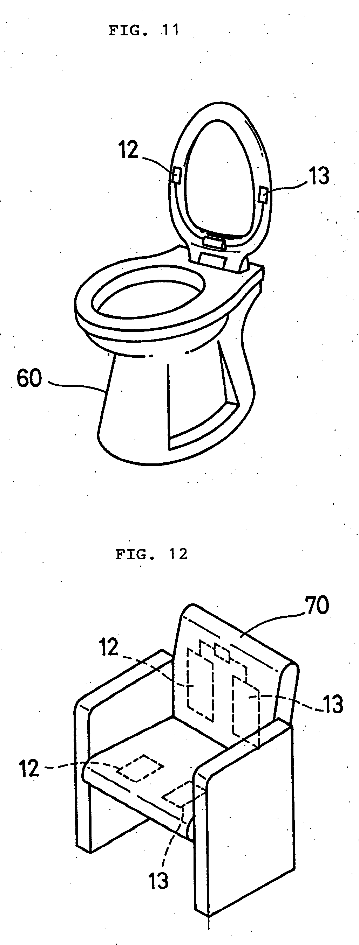

In the setup shown in Figure 11, the bare electrode plates 12,13 have been fitted to the underside of a toilet seat 60. By connecting the electrodes to the supplementary device 20 and the Q detection device 30 and by setting the Q detection device 30 to output an identification signal whenever it detects a specified threshold value, it is possible to detect the presence of someone sitting on said toilet seat 60. The invention can thus be set to measure the length of time a person remains sitting on the toilet seat 60 and, in the event that a specified length of time is exceeded, to output a warning signal on the assumption that there may be something wrong. There is no reason why the electrode plates 12,13 should be fitted only to the underside of the toilet seat 60, however, and they can equally be fitted to some other part of the seat or somewhere inside the toilet bowl providing they are suitably waterproofed and insulated first.

In the setup shown in Figure 12, the electrode plates 12,13 have been fitted to the seat and back of a chair 70. By connecting the electrodes to the supplementary device 20 and the Q detection device 30 and by setting the Q detection device 30 to output an identification signal whenever it detects a specified threshold value, it is possible to detect the presence of someone sitting on the chair 70. The invention can thus be used to indicate the degree of crowding, for example, in a public assembly area such as a theater, cinema or university lecture hall and to use that data to regulate lighting or air conditioning system operations, for example. The invention can similarly be used to enhance the safety features of cars and aeroplanes, for example, by fitting electrodes to the seats as a means of detecting whether safety belts have been fastened or not. There is no reason, of course, why the electrode plates 12,13 should be fitted only to the seat or back of the chair 70 and can, in fact, be fitted in a variety of other positions.

In the embodiment of the invention outlined above, we have assumed that the electrode 10 is connected in parallel to the positive feedback element 22 (Fig.2) but comparable operation and results could be achieved by connecting these same elements in series. The additional capacitance component 41 and resistance component 42 could similarly be connected with the electrode 10 in series (Fig.4) without making any difference to the overall operation of the invention. The above embodiment also assumes the use of thin electrode plates 12,13 but these could well be replaced by thicker plates. Again, it would be possible to incorporate an amplifier into the Q detection device if so required or else to use an external amplifier to amplify the signals.

**Claims**

1. An object detection device comprising an electrode (10) set on the edge of a detection field, a supplementary device (20) which, together with said electrode (10), comprises an oscillation circuit (S), and a Q detection device (30) that detects fluctuations in the quality factor of said oscillation circuit (S).

2. An object detection device according to claim 1, in which said electrode (10) comprises two conductive electrode elements (12, 13).

3. An object detection device according to claim 1, in which said electrode (10) comprises a single conductive electrode element and earth potential.

4. An object detection device according to claim 2, in which said electrode (10) comprises two electrode plates (12, 13).

5. An object detection device according to claim 4, in which said electrode plates (12, 13) are thin and of metal, are aligned at a predetermined distance above an insulating sheet (11) and are covered by an insulating sheet (14).

6. An object detection device according to claim 4, in which said pair of electrode plates (12, 13) are fitted to the outer side of a bath tub (50).

7. An object detection device according to claim 4, in which said pair of electrode plates (12, 13), which have been waterproofed and insulated, are fitted to the inner side of a bath tub (50).

8. An object detection device according to claim 6, in which said Q detection device (30) distinguishes between input signals on the basis of two different threshold values for the purpose of detecting the presence of a person in said bath tub (50) and the level of the water in said bath tub (50), and outputs two identification signals.

9. An object detection device according to claim 4, in which said pair of electrode plates (12, 13) are fitted to the seat of a toilet (60).

10. An object detection device according to claim 9, in which said Q detection device (30) measures the lenght of time during which it detects the presence of a person sitting on the toilet seat (60) and, in the event the measured time exceeds a predetermined time value, outputs a warning signal.

11. An object detection device according to claim 4, in which said pair of electrode plates (12, 13) are fitted to a chair (70).

12. An object detection device according to claim 11, in which a plurality of pairs of electrode plates (12, 13) are fitted to a plurality of chairs (70), and said Q detection device (30) detects fluctuations in the quality factors of a plurality of oscillation circuits (S) each comprising one of said pairs of electrodes (10) and one of said supplementary devices (20), and outputs an identification signal associated with the number of oscillation circuits (5) in which quality factor fluctuations are detected.

13. An object detection device according to anyone of the preceding claims, in which said Q detection device (30) detects fluctuations in the quality factor of said oscillation circuit (S) by means of fluctuations in the amplitude of the voltage output by said oscillation circuit (S).

14. An object detection device according to anyone of the preceding claims, in which said supplementary device (20) comprises an amplification circuit (21) and a positive feedback element (22) connected to said amplification circuit (21), and said electrode (10) is connected in parallel with said positive feedback element (22).

15. An object detection device according to anyone of the claims 1 to 13, in which said supplementary device (20) comprises an amplification circuit (21) and a positive feedback element (22) connected to said amplification circuit (21), and said electrode (10) is connected in series with said positive feedback element (22).

16. An object detection device according to anyone of the preceding claims, in which an amplifier is also provided to amplify the output signals of said Q detection device (30).

FIG. 1

FIG. 2

FIG. 3

Electric Field

12

13

Floor

Equivalent
Circuit

C

FIG. 4

12

13

Floor

Equivalent Circuit C

C 41

R 42

FIG. 5

FIG. 6

FIG. 7

FIG. 8

9

FIG. 9

Cx $\longleftarrow$ Small

$\downarrow$

Cx  Large

FIG. 10

50

12

13

FIG. 11

FIG. 12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 801 799 (C.E. ATKINS) <br> * column 1, line 37 - column 2, line 2 * | 1,13,16 | G01V3/08 |
| Y | | 6,7,9-12 | |
| X | US-A-3 043 993 (F.L. MALTBY) <br><br> * column 2, line 29 - line 48 * <br> * column 3, line 36 - line 45 * <br> * figure 3 * | 1-5,14, 15 | |
| Y | EP-A-0 149 132 (B.E.M. WIENTJES B.V. KUNSTSTOFFEN) <br> * page 2, line 16 - line 26 * | 6 | |
| A | | 8 | |
| Y | FR-A-2 558 953 (S. KRAOUBNER) <br> * figure 1 * | 7 | |
| Y | GB-A-2 210 645 (HO CHIEN-KUNG ET AL.) <br> * column 3, line 1 - line 4 * | 9 | |
| Y | DATABASE WPI <br> Week 8748, <br> Derwent Publications Ltd., London, GB; <br> AN 87-339653 <br> & JP-A-62 246 209 (AISIN SEIKI KK) <br> * Title * | 11,12 | **TECHNICAL FIELDS SEARCHED (Int. Cl.5)** <br><br> G01V |
| Y | DATABASE WPI <br> Week 9023, <br> Derwent Publications Ltd., London, GB; <br> AN 90-171659 <br> & AU-D-4 274 389 (D.S. TZABARY) 12 April 1990 <br> * abstract * | 10 | |
| A | DE-A-2 031 373 (A. BEUTTENMUELLER) <br><br> * page 3, line 17 - line 25 * | 1-5, 13-16 | |

The present search report has been drawn up for all claims

| Place of search | Date of completion of the search | Examiner |
|---|---|---|
| THE HAGUE | 30 AUGUST 1993 | SWARTJES H.M. |

European Patent

Office

EUROPEAN SEARCH REPORT

Application Number

EP    93 10 3876
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | WO-A-852 268 (CONSOLIDATED TECHNOLOGY PTY. LTD.)<br>* figure 1 * | 1,3 | |
| | ----- | | |
| | | | **TECHNICAL FIELDS SEARCHED (Int. Cl.5 )** |

The present search report has been drawn up for all claims

| Place of search | Date of completion of the search | Examiner |
|---|---|---|
| THE HAGUE | 30 AUGUST 1993 | SWARTJES H.M. |

EPO FORM 1503 03.82 (P0401)